# EUROPÄISCHE PATENTANMELDUNG

(11) **EP 4 246 028 A2**
(43) Veröffentlichungstag der Anmeldung: **20.09.2023**
(21) Anmeldenummer: 23190009.3
(22) Anmeldetag: 01.07.2020
(51) Int. Cl.: F16L 37/084

(54) **VENTILBLOCK, SICHERUNGSELEMENT, VENTILEINHEIT, VERFAHREN ZUR HERSTELLUNG EINES VENTILBLOCKS UND VERFAHREN ZUR HERSTELLUNG EINES SICHERUNGSELEMENTS**

(30) Priorität: 09.07.2019 DE 102019118495
(62) Teilanmeldung aus: 20736323.5
(71) Anmelder: ARGO-HYTOS Group AG, 6340 Baar (CH)
(72) Erfinder: MÖSSINGER, Klaus, 74182 Obersulm (DE); PICHLMAIER, Valentin, 75015 Bretten (DE); TRUNNER, Daniel, 76703 Kraichtal (DE); WENDEL, Tobias, 76669 Bad Schönborn (DE); WEISER, Thomas, 74889 Sinsheim (DE)
(74) Vertreter: Meissner Bolte Partnerschaft mbB

(57) **Zusammenfassung**

Die Erfindung betrifft ein Sicherungselement (25) zur Befestigung einer ersten Komponente, nämlich eines Ventils, an einer zweiten Komponente, nämlich einem Ventilblock (10) für wenigstens das Ventil, insbesondere ein Slip-In-Ventil, wobei das Sicherungselement (25) einen ringförmigen Körper (26) aufweist, der radial nach außen offen ausgebildet ist und Fortsätze (27) aufweist, die sich radial nach innen erstrecken, wobei 1. die Fortsätze (27) jeweils an axialen Enden (28) des Körpers (26) angeordnet und zueinander axial beabstandet sind derart, dass ein Zwischenraum (29) zwischen den Fortsätzen (27) zur Aufnahme der Komponenten ausgebildet ist, wobei die Fortsätze (27) wenigstens eine Anlagefläche (31), insbesondere Haltefläche, für die Komponenten aufweisen, die axial innen ausgebildet ist, und wobei der ringförmige Körper (26) eine Vielzahl von Rippen (35) aufweist, die sich radial nach außen erstrecken, wobei die Rippen (35) jeweils zwei axial gegenüberliegende Fortsätze (27) zur Erhöhung einer Haltekraft verbinden, wobei der Ventilblock (10) wenigstens eine Kavität (11) zur Aufnahme des Ventils, wenigstens zwei Öffnungen (12) für den Eintritt und/oder Austritt eines Fluides, wobei die Öffnungen (12) in die Kavität (11) münden, wenigstens einen Montagebereich (14), in dem die wenigstens zwei Öffnungen (12) vorgesehen sind, und wenigstens einen Kragen (13) zur Befestigung des Ventils, der sich zumindest abschnittsweise um die Kavität (11) erstreckt, umfasst, wobei sich der Kragen (13) von der Kavität (11) radial nach außen erstreckt, wobei der Kragen (13) angepasst ist, um den Ventilblock (10) mittels des Sicherungselements (25) mit dem Ventil zu verbinden, wobei der Ventilblock (10) durch Urformen, insbesondere Spritzgießen oder Druckgießen, einstückig ausgebildet ist.

## Beschreibung

Die Erfindung betrifft ein Sicherungselement und ein Verfahren zur Herstellung eines Sicherungselements.

Generell dienen Ventileinheiten zur Steuerung und Regelung von Fluidströmen in einem Fluidsystem. Im Wesentlichen umfassen die Ventileinheiten jeweils ein Ventil und einen Ventilblock, in dem die Ventile angeordnet sind. Die Ventile kommen häufig in Form von Wegeventilen, Stromteilerventilen, Druckventilen, Senkbremsventilen, Drosselventilen oder Proportionalventilen zum Einsatz. Die Ventile können bspw. als Einschraubventile oder Einsteckventile (Slip-In-Ventile) ausgestaltet sein.

Es ist allgemein bekannt, den Ventilblock der Ventileinheit abhängig vom Systemdruck des Fluidsystems auszulegen. Üblicherweise kommen dabei in Niederdrucksystemen Ventilblöcke aus Kunststoff und in Hochdrucksystemen Ventilblöcke aus Metall zum Einsatz. Nachteilig ist hierbei ein hoher, mechanischer Bearbeitungsaufwand zur Herstellung des Ventilblocks, wodurch die Kosten maßgeblich erhöht sind. Insbesondere werden die Ventilblöcke oftmals mechanisch nachbearbeitet, um die erforderlichen Fertigungsgenauigkeiten zu erreichen.

Der Erfindung liegt die Aufgabe zu Grunde, ein Sicherungselement und ein Verfahren zur Herstellung des Sicherungselements anzugeben.

Erfindungsgemäß wird diese Aufgabe durch den Gegenstand des Anspruchs 1 (Sicherungselement) und des Anspruchs 11 (Verfahren zur Herstellung des Sicherungselements) gelöst.

Im Konkreten wird die Aufgabe erfindungsgemäß durch ein Sicherungselement zur Befestigung einer ersten Komponente, nämlich eines Ventils, an einer zweiten Komponente, nämlich einem Ventilblock für wenigstens das Ventil, insbesondere ein Slip-In-Ventil, gelöst. Das Sicherungselement weist einen ringförmigen Körper auf, der radial nach außen offen ausgebildet ist. Mit anderen Worten ist der ringförmige Körper C-förmig ausgebildet. Der ringförmige Körper weist ferner Fortsätze auf, die sich radial nach innen erstrecken. Die Fortsätze sind jeweils an axialen Enden des Körpers angeordnet und zueinander axial beabstandet derart, dass ein Zwischenraum zwischen den Fortsätzen zur Aufnahme der Komponenten ausgebildet ist. Die Fortsätze weisen wenigstens eine Anlagefläche, insbesondere Haltefläche, für die Komponenten auf, die axial innen ausgebildet ist. Der ringförmige Körper weist eine Vielzahl von Rippen auf, die sich radial nach außen erstrecken, wobei die Rippen jeweils zwei axial gegenüberliegende Fortsätze zur Erhöhung einer Haltekraft verbinden. Der Ventilblock umfasst
- wenigstens eine Kavität zur Aufnahme des Ventils,
- wenigstens zwei Öffnungen für den Eintritt und/oder Austritt eines Fluides, wobei die Öffnungen in die Kavität münden,
- wenigstens einen Montagebereich, in dem die wenigstens zwei Öffnungen vorgesehen sind, und
- wenigstens einen Kragen zur Befestigung des Ventils, der sich zumindest abschnittsweise um die Kavität erstreckt.

Der Kragen erstreckt sich von der Kavität radial nach außen und ist angepasst, um den Ventilblock mittels des Sicherungselements mit dem Ventil zu verbinden. Der der Ventilblock ist durch Urformen, insbesondere Spritzgießen oder Druckgießen, einstückig ausgebildet.

Die offene Ausbildung des ringförmigen Körpers hat den Vorteil, dass das Sicherungselement zur Montage bzw. Demontage der Komponenten aufdehnbar, insbesondere spreizbar ist. Dies erleichtert eine Handhabung des Sicherungselements bei der Montage bzw. der Demontage. Die Fortsätze, die sich radial nach innen erstrecken, haben den Vorteil, dass im montierten Zustand die Komponenten durch die Fortsätze axial gehalten werden. Im Unterschied zum Sicherungselement gemäß der EP 1 653 141 B1 wird aufgrund der Anordnung der Fortsätze an den axialen Enden vorteilhaft in axialer Richtung eine besonders kompakte Bauform erreicht, wodurch Bauraum eingespart wird.

Im Betrieb bspw. bei der Ausbildung der ersten Komponente als Slip-In-Ventil und der zweiten Komponente als Ventilblock erfolgt auf das Slip-In-Ventil eine Fluidkraft derart, dass die das Slip-In-Ventil aus dem Ventilblock presst bzw. drückt. Durch das Sicherungselement wird dabei ein axiales Ausschieben des Slip-In-Ventils verhindert, da die Fortsätze das Slip-In-Ventil am Ventilblock axial fixieren bzw. halten. Vorteilhafterweise weisen die Fortsätze eine Anlagefläche bzw. Haltefläche auf, an der die Komponenten zur axialen Fixierung anliegen können. Mit anderen Worten können die Fortsätze zur axialen Fixierung der Komponenten wenigstens einen Anschlag bilden.

Erfindungsgemäß weist der ringförmige Körper eine Vielzahl von Rippen auf, die sich radial nach außen erstrecken. Die Rippen verbinden dabei jeweils zwei axial gegenüberliegende Fortsätze zur Erhöhung einer Haltekraft. Mit anderen Worten stehen die Rippen über den ringförmigen Körper radial nach außen vor. Wirkt im Betrieb und/oder bei einer Montage oder Demontage eine erhöhte Kraft auf die Fortsätze stützen die Rippen die Fortsätze in axialer Richtung ab. Dadurch wird vorteilhaft eine Stabilität der Fortsätze und somit des Sicherungselements erhöht.

Die Erfindung hat weitere Vorteile. Durch die Kavität ist vorteilhaft ein Ventil bzw. ein Slip-In-Ventil aufnehmbar. Die Kavität ermöglicht zusammen mit dem Ventil die Steuerung bzw. Regelung eines oder mehrere Fluidströme. Durch die zwei Öffnungen, die im Montagebereich vorgesehen sind und in die Kavität münden, tritt im Betrieb das Fluid in das Ventil und/oder die Kavität ein. Das Ventil kann die Strömungsrichtung des Fluides steuern und/oder den Druck bzw. den Durchfluss des Fluides regeln. Zusätzlich oder alternativ kann das Ventil den Fluidstrom teilen. Über den Montagebereich kann der Ventilblock mit einem Fluidsystem, insbesondere Leitungssystem, fluidverbunden werden. Durch die Anordnung der Öffnungen im Montagebereich ist vorteilhaft der Anschluss an ein Fluidsystem sowie eine Befestigung des Ventilblocks in einem Arbeitsschritt möglich. Ferner begünstigt diese integrale Bauweise des Montagebereichs eine kompakte Bauweise des Ventilblocks.

Die Erfindung hat den weiteren Vorteil, dass durch den Kragen das Ventil am Ventilblock einfach und schnell befestigbar bzw. montierbar ist. Bei einer Montage wird das Ventil mit einem Steuerabschnitt zur Steuerung und/oder Regelung des Fluides in die Kavität geschoben. In der axialen Endmontageposition liegt das Ventil an dem Kragen des Ventilblocks an und wird an dieser Position gehalten bzw. fixiert. Dazu kann ein separates Sicherungselement zum Einsatz kommen.

Der Ventilblock ist durch Urformen einstückig ausgebildet. Der Kragen ist dabei mit dem Ventilblock durch Urformen, insbesondere Spritzgießen oder Druckgießen, einstückig ausgebildet. Mit anderen Worten ist der Kragen mit dem Ventilblock durch Urformen aus einem Stück hergestellt. Dies hat den Vorteil, dass der Ventilblock sowie der Kragen einfach und kostengünstig herstellbar sind. Bevorzugt wird der Kragen mit dem Ventilblock in einem einzigen Spritzgießschritt oder Druckgießschritt hergestellt. Ferner sind durch die Ausbildung des Ventilblocks mittels Urformen komplexe Bauformen möglich, wodurch eine Variantenvielfalt des Ventilblocks erhöht wird. Des Weiteren ist der Ventilblock dadurch mit geringem Aufwand gewichtsoptimiert herstellbar, sodass Material eingespart wird und somit Kosten reduziert werden. Durch das Urformen ist der Ventilblock in hohen Stückzahlen herstellbar, wobei die Kosten geringgehalten werden.

Der Ventilblock kann durch Gießen aus einem Stück gebildet sein. Der Ventilblock kann als Kunststoffspritzgussteil oder als Aluminiumdruckgussteil ausgebildet sein. Der Ventilblock kann aus einem Thermoplast gebildet sein. Der Ventilblock kann durch 3D-Drucken aus einem Stück gebildet sein. Mit anderen Worten ist denkbar, dass der Ventilblock als ein 3D-Druckteil ausgebildet ist.

Das Sicherungselement dient zur Befestigung eines Ventils, insbesondere eines Slip-In-Ventils, an einem Ventilblock. Alternativ kann das Sicherungselement zur Befestigung einer Fluidleitung, insbesondere Hydraulikleitung, bspw. an einem Behälter, insbesondere Hydrauliktank, dienen. Das Sicherungselement fixiert vorteilhaft die erste Komponente sicher an der zweiten Komponente.

Bevorzugte Ausführungsformen der Erfindung sind in den Unteransprüchen angegeben.

Bei einer bevorzugten Ausführungsform der Erfindung ist der ringförmige Körper zur Montage und/oder Demontage elastisch verformbar. Mit anderen Worten ist der ringförmige Körper aufdehnbar, sodass das Sicherungselement mit den Komponenten formschlüssig in Eingriff bringbar ist. Dadurch wird vorteilhaft eine Verbindung der beiden Komponenten maßgeblich vereinfacht. Das Sicherungselement ist vorteilhaft schnell und einfach handhabbar. Dadurch werden eine Montagezeit verringert sowie Kosten eingespart.

Vorzugsweise sind mehrere Fortsätze jeweils an den axialen Enden angeordnet, wobei die Fortsätze in Umfangsrichtung gleichmäßig verteilt ausgebildet sind. Die Fortsätze können voneinander in Umfangsrichtung beabstandet sein. Hierbei ist vorteilhaft, dass durch die Anlageflächen der einzelnen Fortsätze eine gemeinsame, insbesondere großflächige, Anlagefläche gebildet ist. Im montierten Zustand wird somit eine Axialkraft, insbesondere eine axiale Ausschubkraft, durch wenigstens eine der Komponenten in das Sicherungselement gleichmäßig eingeleitet. Ferner werden dadurch eine verbesserte Spannungsverteilung im Sicherungselement erreicht und somit eine Lebensdauer des Sicherungselements erhöht. Eine Ausfallssicherheit des Sicherungselements wird somit maßgeblich erhöht.

Weiter vorzugsweise ist wenigstens ein Übergang zwischen den Fortsätzen und dem ringförmigen Körper nach der Zugdreiecksmethode ausgebildet. Bevorzugt ist wenigstens ein erster Übergang in Umfangsrichtung zwischen den einzelnen Fortsätzen und dem ringförmigen Körper ausgebildet und/oder wenigstens ein zweiter Übergang zwischen den einzelnen Fortsätzen und dem ringförmigen Körper zum Zwischenraum hin ausgebildet. Mittels der Ausbildung des jeweiligen Übergangs gemäß der Zugdreiecksmethode werden die im Betrieb und/oder bei der Montage auftretenden Spannungen, insbesondere Zugspannungen, im Übergang homogen verteilt. Mit anderen Worten werden die im Übergang lokal auftretenden Spannungen durch die Ausbildung des Übergangs aus mehreren, insbesondere drei, Zugdreiecken minimiert. Dadurch wird vorteilhaft eine erhöhte Anzahl an Lastwechseln der Fortsätze, insbesondere elastische Verformungen, ermöglicht und eine erhöhte Lebensdauer des Sicherungselements erreicht.

Generell werden bei der Zugdreiecksmethode mehrerer, insbesondere drei, Zugdreiecke kombiniert. Die Zugdreiecke sind als gleichschenklige Dreiecke ausgebildet. Ein erstes Zugdreieck kann im Wesentlichen ein rechtwinkeliges Dreieck bilden. Die beiden Schenkel eines zweiten Zugdreiecks entsprechen der Länge der halben Hypotenuse des ersten Zugdreiecks, wobei sich die Hypotenuse des zweiten Zugdreiecks von der halben Länge, insbesondere der Mitte, der Hypotenuse des ersten Zugdreiecks ausgehend erstreckt. Ferner entsprechen die beiden Schenkel eines dritten Zugdreiecks der Länge der halben Hypotenuse des zweiten Zugdreiecks, wobei sich die Hypotenuse des dritten Zugdreiecks von der halben Länge, insbesondere der Mitte, der Hypotenuse des zweiten Zugdreiecks ausgehend erstreckt. Die Übergänge weisen eine Längsseite und eine Breitseite auf, wobei Längsseite in Zugkraftrichtung ausgebildet ist. Durch eine derartige Anordnung der Zugdreiecke werden Spannungen im Bereich des Übergangs verringert und somit eine Lebensdauer des Sicherungselements erhöht.

Bei einer bevorzugten Ausführungsform sind die Fortsätze im Querschnitt jeweils trapezförmig ausgebildet. Mit anderen Worten verjüngen sich die Fortsätze im Querschnitt ausgehend vom ringförmigen Körper radial nach innen. Dadurch wird vorteilhaft ein Aufschieben des Sicherungselements auf eine und/oder beide Komponenten erleichtert.

Bei einer weiteren bevorzugten Ausführungsform weisen die Fortsätze ein Widerstandsmoment auf, das sich von innen radial nach außen zum ringförmigen Körper hin vergrößert. Dies hat den Vorteil, dass eine Spannungsverteilung verbessert und eine Versagenskraft des Sicherungselements erhöht wird. Dadurch kann vorteilhaft eine sichere Fixierung der Komponente erreicht werden.

Bei einer weiteren bevorzugten Ausführungsform bilden die Fortsätze an beiden axialen Enden des ringförmigen Körpers jeweils wenigstens eine Einführfase für die Komponenten, die axial nach innen verläuft. Mit anderen Worten ist die Einführfase zum Zwischenraum hin ausgerichtet. Dadurch wird vorteilhaft ein Aufschieben des Sicherungselements auf eine und/oder beide Komponenten erleichtert. Im Allgemeinen wird dadurch vorteilhaft eine Montage vereinfacht, wodurch Kosten eingespart werden.

Bei einer besonders bevorzugten Ausführungsform weist der ringförmige Körper wenigstens zwei Aufnahmeelemente für wenigstens ein Montagemittel zum Ausformen und/oder Demontieren, insbesondere zum elastischen Verformen des Sicherungselements auf. Das Montagemittel kann durch eine Zange gebildet sein. Die Aufnahmeelemente können jeweils eine Nase bilden. Zum Ausformen bzw. Demontieren kann das Montagemittel in die jeweilige Nase eingreifen, insbesondere mit diesen zusammenwirken. Bei einer Ausformung bzw. Demontage wirkt das Montagemittel mit den Aufnahmeelementen derart zusammen, dass das Sicherungselement aufgedehnt bzw. gespreizt wird. Das Sicherungselement ist dadurch vorteilhaft mit den Komponenten schnell und einfach verbindbar. Konkreter ist dadurch das Ventil am dem Ventilblock einfach und schnell montierbar bzw. fixierbar.

Weiter vorzugsweise sind die Rippen in Umfangsrichtung gleichmäßig verteilt angeordnet, sodass sich bei einem elastischen Aufdehnen, insbesondere bei einer Montage oder Demontage, auftretende Spannungen im Sicherungselement homogen verteilen. Dies hat den Vorteil, dass sich das Sicherungselement beim elastischen Verformen bzw. bei einer Montage oder Demontage wesentlich weiter öffnen lässt als ein Sicherungselement mit einem konstanten Querschnitt des ringförmigen Körpers. Mit anderen Worten wird dadurch eine Montage bzw. Demontage des Sicherungselements und somit der Komponenten maßgeblich erleichtert.

Bei einer bevorzugten Ausführungsform ist die Kavität durch ein Sackloch gebildet, in das das Ventil zur Montage einführbar ist. Mit anderen Worten ist die Kavität durch eine im Wesentlichen hohlzylindrische Ausnehmung gebildet. Im montierten Zustand kann das Ventil bis kurz vor das axiale Ende des Sacklochs ragen, sodass in diesem Bereich ein separater Fluidraum gebildet ist. In den Fluidraum kann eine der beiden Öffnungen für den Eintritt oder den Austritt des Fluides münden. Das Sackloch hat den Vorteil, dass das axiale Ende der Kavität durch die Sacklochform geschlossen ausgebildet ist und somit eine zusätzliche Abdichtung der Kavität entfällt.

Bei einer weiteren bevorzugten Ausführungsform ist die Kavität zur Anlage von wenigstens zwei, insbesondere mehreren, Dichtelementen des Ventils gestuft ausgebildet. Mit anderen Worten weist die Kavität wenigstens eine Stufe auf, die die Kavität nach innen verjüngt. Die Kavität kann rotationssymmetrisch ausgebildet sein. Bevorzugt weist die Kavität mehrere Stufen auf. Zwischen den Stufen kann die Kavität wenigstens einen konischen Abschnitt aufweisen. Mit anderen Worten kann die Kavität konisch nach innen zulaufen. Der konische Abschnitt kann eine Ausformschräge bilden, die vor und/oder nach der Stufe ausgebildet ist. Die Ausformschräge dient zur Entfernung eines Kerns wenigstens eines Urformwerkzeugs aus der Kavität nach einem Urformvorgang, insbesondere Spritzguss- oder Druckgussvorgang. Die Ausformschräge kann abhängig vom Werkstoff zwischen 0,5° und 3° betragen. Es ist denkbar, dass die Kavität nach der Ausbildung durch Urformen unbearbeitet ist. Durch die gestufte Ausbildung sind in axialer Richtung der Kavität mehrere Dichtungsverbindungen, insbesondere durch Dichtelemente, zwischen dem Ventil und dem Ventilblock nacheinander realisierbar, sodass die Öffnungen für den Fluideintritt bzw. - austritt gegeneinander abgedichtet sind. Dadurch wird eine sichere Funktion des Ventils erreicht.

Die Kavität kann wenigstens zwei Dichtflächen zur Abdichtung gegenüber dem Ventil aufweisen. Die Dichtflächen können in wenigstens einem der konischen Abschnitte der Kavität angeordnet sein. Im montierten Zustand wirken die Dichtflächen mit wenigstens einem Dichtelement des Ventils zusammen, sodass die Öffnungen für das Fluid gegeneinander abgedichtet sind. Ferner kann wenigstens eine der Dichtflächen mit einem Dichtelement des Ventils zusammenwirken, um die Kavität zu einem offenen Ende hin fluiddicht abzudichten. Die Dichtflächen ermöglichen somit vorteilhaft die Abdichtung der Öffnungen zueinander sowie die Abdichtung der Kavität zum offenen Ende hin.

Vorzugsweise ist der Kragen an einem ersten axialen Ende der Kavität ausgebildet, an dem die Kavität zum Einführen des Ventils nach außen offen ist. Bevorzugt ist der Kragen zur Befestigung bzw. zum Halten des Ventils außerhalb der Kavität angeordnet. Hierbei ist vorteilhaft, dass das Ventil bei einer Montage am Kragendes Ventilblocks anliegt. Diese axiale Position des Ventils entspricht der axialen Endmontageposition. Das Ventil ist somit durch den Kragen des Ventilblocks in axialer Richtung einfach und schnell exakt positionierbar.

Weiter vorzugsweise ist der Kragen am Ventilblock die Kavität radial umlaufend ausgebildet. Der Kragen kann sich von der Kavität ausgehend radial nach außen erstrecken. Der Kragen kann ausschließlich durch Urformen, insbesondere Spritzgießen oder Druckgießen, mit dem Ventilblock einstückig ausgebildet sein. Der Kragen kann unbearbeitet, insbesondere mechanisch unbearbeitet sein. Mit anderen Worten kann der Kragen nicht nachbearbeitet sein.

Durch den Kragen ist der Ventilblock mittels einem Sicherungselement mit dem Ventil verbindbar. Bei einer Montage des Ventils wird das Sicherungselement über den Kragen des Ventilblocks geschoben, sodass das Sicherungselement mit dem Kragen formschlüssig verbunden wird. Anschließend wird das Ventil in die Kavität zumindest teilweise eingeführt derart, dass das Ventil mit einer Gegenkontur in das Sicherungselement eingreift, insbesondere einschnappt. Vorzugsweise weist der Kragen eine stirnseitige Kontaktfläche auf, an der das Ventil bei einer Montage anliegt. Konkret kann das Ventil nach der Montage, insbesondere in der Endmontageposition, mit der Gegenkontur an der stirnseitigen Kontaktfläche des Kragens der Ventilblocks anliegen. Durch den Kragen kann somit vorteilhaftweise das Ventil mit dem Ventilblock einfach und schnell verbunden werden.

Bei einer weiteren bevorzugten Ausführungsform weist der Ventilblock wenigstens einen Fortsatz auf, der radial nach außen ausgebildet ist und vom Kragen axial beabstandet ist. Der Fortsatz kann den Kragen radial überragen. Der Fortsatz kann ausschließlich durch Urformen, insbesondere Spritzgießen oder Druckgießen, mit dem Ventilblock einstückig ausgebildet sein. Der Fortsatz kann unbearbeitet, insbesondere mechanisch unbearbeitet sein. Der Fortsatz kann einen axialen Anschlag für das Sicherungselement zur Befestigung bzw. zum Halten des Ventils bilden. Der Fortsatz kann vom Kragen derart beabstandet sein, dass eine Nut zwischen dem Fortsatz und dem Kragen gebildet ist. Die Nut kann umlaufend ausgebildet sein. Der Fortsatz hat den Vorteil, dass bei einer Montage des Ventils das Sicherungselement auf einfache Weise axial positioniert wird. Durch den Fortsatz wird somit eine Montage erleichtert, wodurch Zeit und Kosten eingespart werden.

Vorzugsweise weist der Ventilblock eine Vielzahl von Rippen auf, die gitterförmig ausgebildet sind. Dies hat den Vorteil, dass der Ventilblock eine hohe Stabilität bei geringem Bauteilgewicht aufweist.

Bei einer bevorzugten Ausführungsform weist der Ventilblock wenigstens ein Formschlussmittel, durch das der Ventilblock mit weiteren Ventilblöcken formschlüssig verbindbar ist. Mit anderen Worten ist durch das Formschlussmittel eine Anordnung mehrere Ventilblöcke herstellbar, die miteinander formschlüssig verbunden sind. Der Ventilblock weist bevorzugt wenigstens ein erstes Formschlussmittel und wenigstens ein zweites Formschlussmittel auf. Das erste Formschlussmittel kann am Ventilblock abstehend ausgebildet sein und das zweite Formschlussmittel im Ventilblock als Ausnehmung ausgebildet sein. Hierbei ist vorteilhaft, dass der Ventilblock auf einfache Weise mit weiteren Ventilblöcken zu einer Anordnung verbunden werden kann, die eine kompakte Bauform aufweist. Der Ventilblock ist durch seine Modularität einfach in der Handhabung, wodurch eine Montage, insbesondere mehrerer Ventilblöcke, erleichtert wird.

Das Formschlussmittel kann V-förmig, insbesondere Schwalbenschwanz-förmig ausgebildet sein. Dies hat den Vorteil, dass durch die formschlüssige Verbindung bspw. zweier Ventilblöcke diese in wenigstens einer Ebene gehalten werden. Die Ventilblöcke weisen dadurch vorteilhaft eine definierte Position zueinander auf, die eine Montage erleichtern.

Bei einer bevorzugten Ausführungsform ist der Montagebereich an einer Unterseite des Ventilblocks angeordnet und mit wenigstens einem Flanschanschluss, insbesondere eines Fluidsystems verbindbar. Der Montagebereich ist vorzugsweise durch die Öffnungen für das Fluid mit der Kavität fluidverbunden. Der Montagebereich kann ausschließlich durch Urformen, insbesondere Spritzgießen oder Druckgießen, mit dem Ventilblock einstückig ausgebildet sein. Mit anderen Worten kann der Montagebereich unbearbeitet, insbesondere mechanisch unbearbeitet sein. Der Montagebereich kann wenigstens eine Montagefläche aufweisen, an dem der Flanschanschluss im montierten Zustand anliegt. Über den Montagebereich kann der Ventilblock vorteilhaft mit einem Fluidsystem, insbesondere einem Hydrauliksystem, fluidverbunden werden.

Ein nebengeordneter Aspekt der Erfindung betrifft ein Verfahren zur Herstellung eines Sicherungselements, bei dem ein ringförmiger Körper durch wenigstens einen Spritzgussvorgang einstückig ausgebildet wird. Der ringförmige Körper ist radial nach außen offen ausgebildet und weist eine Vielzahl von Fortsätzen auf, die sich radial nach innen erstrecken. Die Fortsätze sind jeweils an einem axialen Ende des Körpers angeordnet und voneinander axial beabstandet derart, dass ein Zwischenraum zwischen den Fortsätzen zur Aufnahme der Komponenten ausgebildet ist.

Bei einer bevorzugten Ausführungsform des erfindungsgemäßen Herstellungsverfahrens wird der ringförmige Körper durch den Spritzgussvorgang auf einem Kern eines Spritzgusswerkzeugs formschlüssig angeordnet.

Bei einer weiteren bevorzugten Ausführungsform des erfindungsgemäßen Herstellungsverfahrens wird der ringförmige Körper durch elastisches Verformen, insbesondere durch Spreizen vom Kern des Spritzgusswerkzeugs abgenommen. Bei dieser Ausführungsform ist vorteilhaft, dass ein Faltkern zur Ausformung des Sicherungselements entfallen kann. Die Herstellungskosten werden dadurch maßgeblich gesenkt.

Vorzugsweise wird der ringförmige Körper durch wenigstens ein Entnahmewerkzeug, insbesondere eine Abziehzange, zum Abnehmen elastisch verformt, insbesondere gespreizt.

Darüber hinaus ist eine Ventileinheit mit wenigstens einem Ventil, insbesondere einem Wegeventil, einem Ventilblock und einem erfindungsgemäßen Sicherungselement offenbart. Das Ventil und der Ventilblock weisen jeweils wenigstens eine Kontur, insbesondere einen Kragen, zur Befestigung auf. Ferner greifen das Ventil und der Ventilblock mit den jeweiligen Konturen in das Sicherungselement ein, sodass das Sicherungselement mit den Konturen zusammenwirkt und das Ventil und den Ventilblock miteinander verbindet.

Bei einer Montage des Ventils am Ventilblock wird das Sicherungselement über die Kontur, insbesondere den Kragen, des Ventilblocks geschoben, sodass das Sicherungselement mit der Kontur formschlüssig verbunden ist. Die Kontur bzw. der Kragen greift dabei in das Sicherungselement ein. Anschließend wird das Ventil in den Ventilblock zumindest teilweise eingeführt bis die Kontur bzw. der Kragen des Ventils in das Sicherungselement eingreift. Dabei wird das Ventil mit der Kontur in das Sicherungselement geschoben, sodass diese in das Sicherungselement eingreift. Das Sicherungselement fixiert das Ventil am Ventilblock derart, dass ein axiales Ausschieben des Ventils aus dem Ventilblock verhindert wird. Hierbei ist vorteilhaft, dass das Ventil ohne ein zusätzliches Werkzeug per Hand einfach und schnell montierbar ist. Dadurch werden Herstellungskosten und insbesondere Montagekosten eingespart.

Zudem ist ein Verfahren zur Herstellung eines Ventilblocks für wenigstens ein Ventil, insbesondere Slip-In-Ventil, offenbart. Bei dem Herstellungsverfahren wird ein Ventilblock durch wenigstens ein Urformverfahren einstückig ausgebildet. Der Ventilblock kann dabei durch Gießen einstückig ausgebildet werden. Der Ventilblock kann durch ein Spritzgussverfahren oder ein Druckgussverfahren einstückig ausgebildet werden. Der Ventilblock umfasst hierbei wenigstens eine Kavität zur Aufnahme eines Ventils, insbesondere eines Slip-In-Ventils, und wenigstens zwei Öffnungen für den Eintritt und/oder den Austritt eines Fluides. Die Öffnungen münden dabei in die Kavität. Zusätzlich umfasst der Ventilblock wenigstens einen Kragen zur Befestigung des Ventils, der sich zumindest abschnittsweise um die Kavität erstreckt. Des Weiteren weist der Ventilblock einen Montagebereich auf, in dem die wenigstens zwei Öffnungen vorgesehen sind. Die Kavität, die Öffnungen, der Kragen und der Montagebereich werden hierbei mit dem Ventilblock durch das Urformverfahren, insbesondere durch Spritzgießen oder Druckgießen, hergestellt.

Es ist denkbar, dass der Kragen zur Befestigung des Ventils und/oder die Kavität und/oder der Montagebereich ausschließlich durch wenigstens ein Urformverfahren ausgebildet werden. Mit anderen Worten werden der Kragen und/oder die Kavität und/oder der Montagebereich nachbearbeitungsfrei durch das Urformverfahren hergestellt. Dadurch entfällt vorteilhaft eine nachträgliche, zerspanende Bearbeitung des Ventilblocks, wodurch die Herstellungskosten reduziert werden.

Zu den weiteren Vorteilen der Verfahren zur Herstellung eines Ventilblocks sowie eines erfindungsgemäßen Sicherungselements wird auf die im Zusammenhang mit dem Sicherungselement erläuterten Vorteile verwiesen. Darüber hinaus können die Verfahren alternativ oder zusätzlich einzelne oder eine Kombination mehrerer zuvor in Bezug auf das Sicherungselement genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie der Ventilblock und das erfindungsgemäße Sicherungselement ausgestaltet sein können.

In diesen zeigen,
- Fig. 1: eine perspektivische Ansicht eines Ventilblocks nach einem bevorzugten Ausführungsbeispiel;
- Fig. 2: eine Längsschnittansicht des Ventilblocks gemäß Fig. 1;
- Fig. 3: eine Draufsicht des Ventilblocks gemäß Fig. 1;
- Fig. 4: eine perspektivische Ansicht eines Sicherungselements nach einem bevorzugten erfindungsgemäßen Ausführungsbeispiel;
- Fig. 5: eine Draufsicht des Sicherungselements gemäß Fig. 4;
- Fig. 6: eine Längsschnittansicht des Sicherungselements gemäß Fig. 4; und
- Fig. 7: eine schematische Schnittansicht eines Übergangs gemäß den Fig. 1 bis 6.

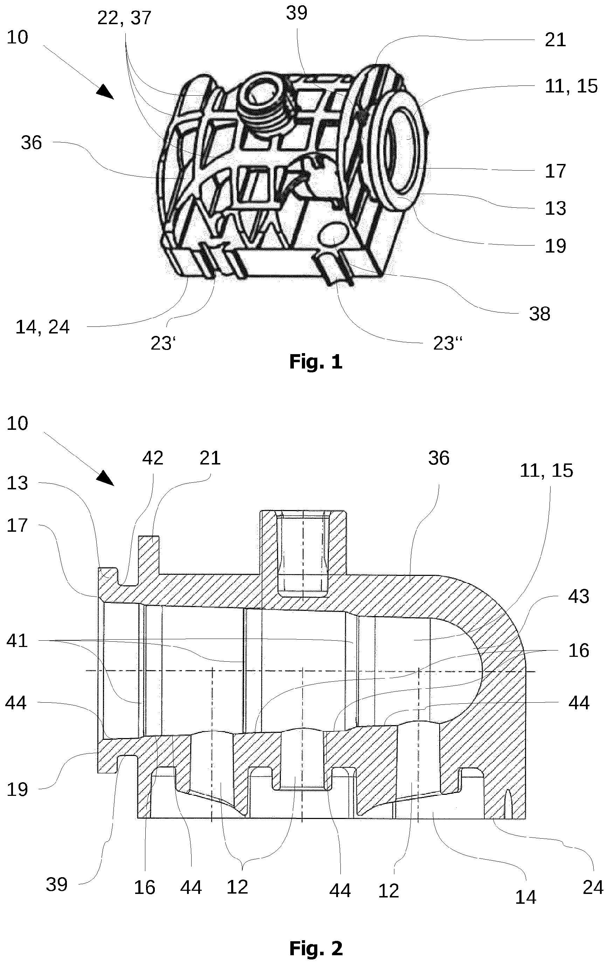

Fig. 1 bis Fig. 3 zeigen einen Ventilblock 10 für ein Ventil, insbesondere ein Slip-In-Ventil, nach einem bevorzugten Ausführungsbeispiel. Der Ventilblock 10 ist durch Urformen, insbesondere Spritzgießen oder Druckgießen, einstückig ausgebildet. Der Ventilblock 10 kann durch Gießen aus einem Stück gebildet sein. Der Ventilblock kann durch ein Kunststoffspritzgussteil oder ein Aluminiumdruckgussteil gebildet sein.

Der Ventilblock 10 umfasst eine Kavität 11 zur Aufnahme eines Ventils, drei Öffnungen 12 für den Eintritt und/oder Austritt eines Fluides, einen Kragen 13 zur Befestigung des Ventils und einen Montagebereich 14 zur Befestigung des Ventilblocks 10 an einem Anschluss eines Fluidsystems, insbesondere eines Hydrauliksystems. Das Fluid kann ein Hydrauliköl sein. Alternativ kann das Fluid auch eine andere Flüssigkeit oder ein Gas sein.

Gemäß Fig. 1 ist der Montagebereich 14 des Ventilblocks 10 plattenförmig ausgebildet. Der Ventilblock 14 weist einen Grundkörper 36 auf, der auf dem Montagebereich 14 angeordnet ist. Der Grundkörper 36 weist dabei die Kavität 11 auf, die im Grundkörper 26 in Längsrichtung ausgebildet ist. Der Grundkörper 36 weist eine gitterförmige Verstärkungsstruktur 37 auf, die durch eine Vielzahl von Rippen 22 gebildet ist. Der Grundkörper 36 ist mit dem Montagebereich 14 durch Urformen einstückig ausgebildet.

Der Montagebereich 14 weist ferner zwei Durchgangsöffnungen 38 auf, um den Ventilblock 10 mit dem nicht dargestellten Anschluss eines Fluidsystems zu verbinden. Die Durchgangsöffnungen 38 können auch zur Montage an einem festen Körper dienen. Im Bereich der Durchgangsöffnungen 38 weist der Grundkörper 36 eine Materialfreistellung auf, sodass die Durchgangsöffnungen 38 frei zugänglich sind.

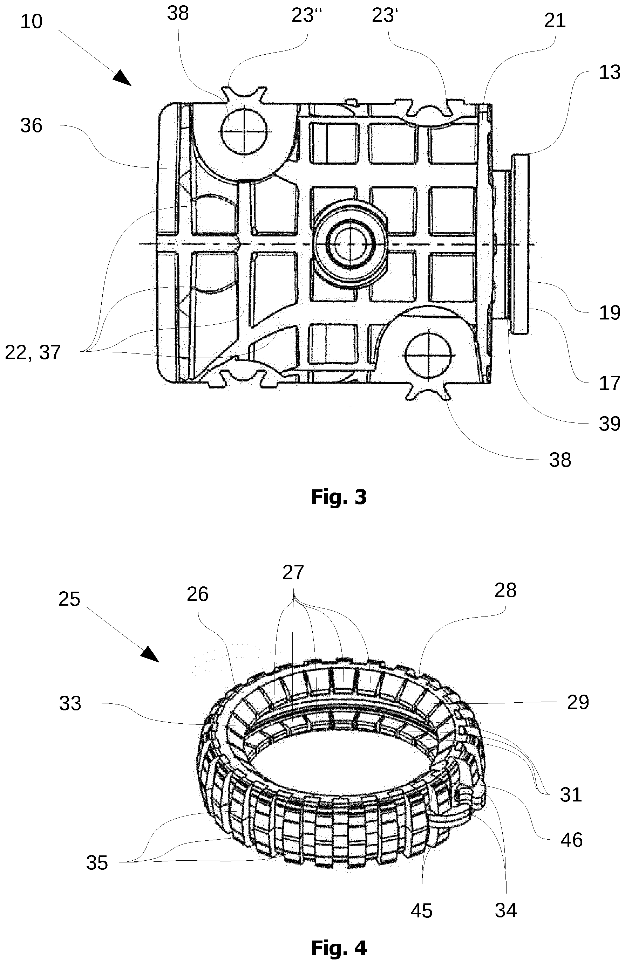

Gemäß Fig. 3 ist gezeigt, dass der Montagebereich 14 insgesamt vier Formschlussmittel 23 umfasst, wobei zwei erste Formschlussmittel 23' jeweils durch eine Ausnehmung gebildet sind und zwei zweite Formschlussmittel 23" jeweils durch eine Ausformung gebildet sind. Die Formschlussmittel 23 sind jeweils V-förmig ausgebildet. Durch die Formschlussmittel 23 ist der Ventilblock 10 mit weiteren Ventilblöcken formschlüssig verbindbar.

Wie in Fig. 1 gezeigt, ist der Kragen 13 zur Befestigung eines nicht dargestellten Ventils an einem Fortsatz 21 ausgebildet. Der Fortsatz 21 ist am Ventilblock 10 stirnseitig ausgebildet. Der Fortsatz 21 ist ausgehend von der Kavität 11 radial nach außen ausgebildet. Der Kragen 13 ist an einem ersten axialen Ende 17 der Kavität 11 ausgebildet. Die Kavität 11 ist am ersten axialen Ende 17 zum Einführen bzw. zum Montieren des Ventils in Längsrichtung nach außen offen ausgebildet. Der Kragen 13 erstreckt sich um die Kavität 11. Der Kragen 13 ist außerhalb der Kavität 11 angeordnet. Der Kragen 13 ist ausschließlich durch Urformen, insbesondere Spritzgießen oder Druckgießen, mit dem Ventilblock 10 einstückig ausgebildet. Mit anderen Worten ist der Kragen 13 nach der Ausbildung durch Urformen mechanisch unbearbeitet. Der Kragen 13 ist somit keiner nachträglichen Zerspanung unterzogen.

Wie in den Fig. 1 bis 3 ersichtlich ist, umläuft der Kragen 13 die Kavität 11 radial. Der Kragen 13 erstreckt sich ausgehend von der Kavität 11 radial nach außen. Der Kragen 13 ist vom Fortsatz 21 beabstandet. Konkret ist zwischen dem Fortsatz 21 und dem Kragen 13 eine umlaufende Nut 39 ausgebildet. Die Breite der umlaufenden Nut 39 definiert den Abstand zwischen dem Fortsatz 21 und dem Kragen 13. Der Kragen 13 weist eine stirnseitige Kontaktfläche 19 auf, an der das Ventil bei einer Montage anliegt. Im Betrieb kann das Ventil von der Kontaktfläche 19 beabstandet sein. Der Abstand zwischen dem Ventil und der Kontaktfläche 19 kann dabei sehr gering sein. Der Kragen 13 und die umlaufende Nut 39 sind ausschließlich durch Urformen, insbesondere Spritzgießen oder Druckgießen, mit dem Ventilblock 10 einstückig ausgebildet.

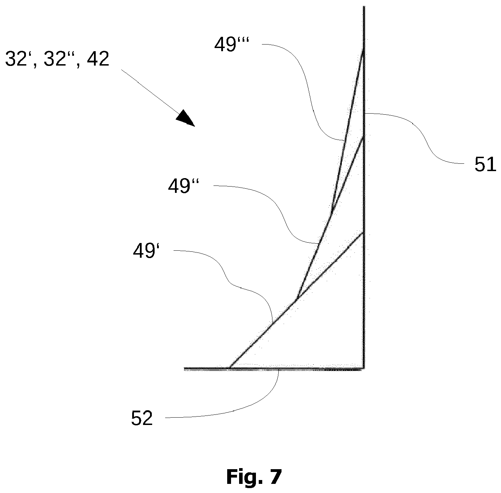

Zwischen dem Kragen 13 und der umlaufenden Nut 39 ist ein Übergang 42 ausgebildet. Der Übergang 42 ist nach der Zugdreiecksmethode ausgebildet, auf die anhand Fig. 7 später näher eingegangen wird. Durch den Übergang 42 weist der Kragen 13 eine erhöhte Versagenskraft auf. Mit anderen Worten kann der Kragen 13 durch den Übergang 42 auftretende Zugkräfte in die Nut 39 bzw. den Grundkörper 36 des Ventilblocks 10 verbessert einleiten. Dadurch werden vorteilhaft lokale Zugspannungen verbessert verteilt und somit eine Lebensdauer erhöht.

Gemäß Fig. 2 ist die Kavität 11 durch eine Sackloch 15 gebildet, in das das Ventil zur Montage einführbar ist. Die Kavität 11 weist insgesamt drei Stufen 41 auf, die die Kavität 11 zu einem zweiten axialen Ende 43 hin verjüngen. Die Stufen 41 sind als Schrägen ausgebildet, die die Kavität 11 jeweils zum zweiten axialen Ende 43 hin verjüngen. Die Stufen 41 können auch jeweils als Rundung ausgebildet sein, die die Kavität 11 zum zweiten axialen Ende 43 hin verjüngen. Die Kavität 11 ist rotationssymmetrisch ausgebildet.

Ferner weist die Kavität 11 mehrere konische Abschnitte 44 auf. Die konischen Abschnitte 44 bilden jeweils eine Ausformschräge. Die Ausformschräge dient zur Entfernung bzw. Ausformung eines Kerns wenigstens eines Urformwerkzeugs aus der Kavität 11 nach einem Urformvorgang, insbesondere Spritzguss- oder Druckgussvorgang. Die Ausformschräge kann abhängig vom Werkstoff des Ventilblock 10 zwischen 0,5° und 3° betragen. Es ist denkbar, dass die Kavität 11 nach der Ausbildung durch Urformen unbearbeitet ist.

Gemäß Fig. 2 sind zwei der konischen Abschnitte 44 zwischen den drei Stufen 41 ausgebildet. In den zwei konischen Abschnitten 44 ist wenigstens eine Dichtfläche 16 vorgesehen, um im montierten Zustand den Ventilblock 10 gegenüber dem Ventil abzudichten. Durch die Stufen 41 sind mehrere dichte Verbindungen des Ventils gegenüber dem Ventilblock 10 in Längsrichtung der Kavität 11 realisierbar.

Der Ventilblock 10 umfasst drei Öffnungen 12 für den Eintritt und/oder Austritt des Fluides. Wie in Fig. 2 ersichtlich, sind die Öffnungen 12 im Montagebereich 14 vorgesehen. Die Öffnungen 12 durchdringen den Montagebereich 14 und münden in die Kavität 11. Mit anderen Worten bilden die Öffnungen 12 jeweils einen freien Durchgang von einer Unterseite 24 des Ventilblocks 10 in die Kavität 11. Durch die Öffnungen 12 ist somit die Unterseite 24 des Ventilblocks 10 mit der Kavität 11 fluidverbunden. Die Unterseite 24 ist mit wenigstens einem nicht dargestellten Flanschanschluss eines Fluidsystems, insbesondere einer Fluidkomponente, verbindbar. Im Betrieb tritt das Fluid durch die Öffnungen 12 in die Kavität 11 und/oder in das in die Kavität 11 eingeführte Ventil (nicht dargestellt) ein und/oder tritt das Fluid durch die Öffnungen 12 aus der Kavität 11 und/oder aus dem in die Kavität 11 eingeführte Ventil aus.

Gemäß den Fig. 4 bis 6 ist eine Sicherungselement 25 zur Befestigung einer ersten Komponente an einer zweiten Komponente nach einem bevorzugten erfindungsgemäßen Ausführungsbeispiel gezeigt. Die erste Komponente kann ein Ventil und die zweite Komponente ein Ventilblock sein. Alternativ kann die erste Komponente ein Anschluss einer Fluidleitung und die zweite Komponente ein Anschluss eines Behälters, insbesondere eines Hydrauliktanks sein. Die vorstehend genannten Komponenten stellen lediglich Beispiele dar und sind daher nicht auf diese eingeschränkt.

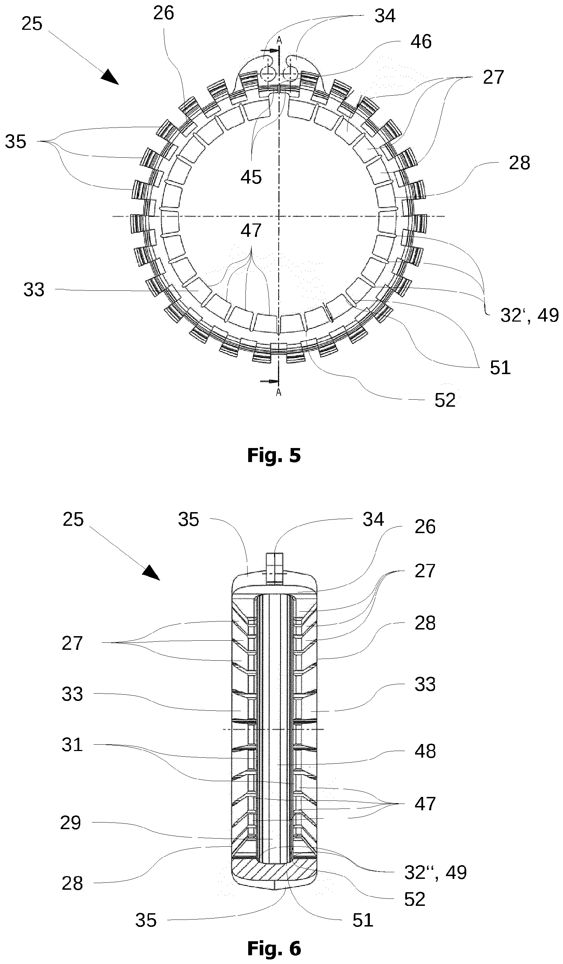

Wie in den Fig. 4 und 5 gezeigt, weist das Sicherungselement 25 einen ringförmigen Körper 26 auf, der radial nach außen offen ausgebildet ist. Mit anderen Worten ist der ringförmige Körper 26 geschlitzt ausgebildet, sodass der ringförmige Körper 26 eine C-Form aufweist. Konkret umfasst der ringförmige Körper 26 zwei Ringenden 45, die voneinander beabstandet sind. Zwischen den Ringenden 45 ist ein Schlitz 46 ausgebildet, durch den der ringförmige Körper 26 radial nach außen offen ist. Der ringförmige Körper 26 ist zur Montage und/oder Demontage und/oder zur Ausformung elastisch verformbar.

Ferner weist der ringförmige Körper 26 eine Vielzahl von Fortsätzen 27 auf, die sich radial nach innen erstrecken. Zusammen begrenzen die Fortsätze 27 mit einer radial innen ausgebildeten Kopfseite 47 eine Durchgangsöffnung, die in Längsrichtung ausgebildet ist. Die Fortsätze 27 weisen radial nach innen eine gleiche Länge auf. Es ist auch denkbar, dass wenigstens ein einzelner Fortsatz länger oder kürzer als die Fortsätze 27 ausgebildet sind. Die Fortsätze 27 sind in Umfangsrichtung gleichmäßig verteilt ausgebildet. Konkret sind die Fortsätze 27 am Innenumfang des ringförmigen Körpers 26 ausgebildet und in Umfangsrichtung gleichmäßig verteilt. Die Fortsätze 27 sind in Umfangsrichtung voneinander beabstandet.

Wie in Fig. 5 gezeigt, sind in Umfangsrichtung ausgehend von den Ringenden 45 zwischen den Fortsätzen 27 jeweils zwei Übergange 32' ausgebildet. Der jeweilige Übergang 32' ist dabei zwischen dem einzelnen Fortsatz 27 und dem ringförmigen Körper 26 vorgesehen. Die Übergänge 32' sind nach der Zugdreiecksmethode ausgebildet, auf die anhand Fig. 7 später näher eingegangen wird. Die Übergänge 32' sind derart ausgebildet, dass sich eine Längsseite 51 des jeweiligen Übergangs 32' entlang des Fortsatzes 27 zur Durchgangsöffnung hin erstreckt.

Gemäß Fig. 4 und 6 sind die Fortsätze 27 jeweils an einem axialen Ende 28 des Körpers 26 angeordnet und zueinander axial beabstandet derart, dass ein Zwischenraum 29 zwischen den Fortsätzen 27 zur Aufnahme der Komponenten ausgebildet ist. Konkret ist der Zwischenraum 29 axial zwischen den Fortsätzen 27 ausgebildet derart, dass die Komponenten aufnehmbar sind. Die Fortsätze 27 weisen jeweils eine Anlagefläche 31, insbesondere Haltefläche, für die Komponenten auf, die axial innen ausgebildet ist. Mit anderen Worten sind die Anlageflächen 31 an den Fortsätzen 27 dem Zwischenraum 29 zugewandt ausgebildet. Der Zwischenraum 29 ist durch eine Innenumfangsfläche 48 des ringförmigen Körpers 26 radial begrenzt und in axial beidseitig durch die Anlageflächen 31 der Fortsätze 27 begrenzt. Zwischen der Anlagefläche 31 der Innenumfangsfläche 48 ist ein weiterer Übergang 32" nach der Zugdreiecksmethode ausgebildet, um die bei der Montage und Demontage sowie im Betrieb auftretenden Zugkräfte verbessert in den ringförmigen Körper 26 einzuleiten. Die Längsseite 51 des Übergangs 32" erstreckt sich entlang Innenumfangsfläche 48 axial zum Zwischenraum 29 hin.

Die Fortsätze 27 sind im Querschnitt jeweils trapezförmig ausgebildet. Konkret weisen die Fortsätze 27 ein Widerstandsmoment auf, das sich von der Kopfseite 47 der Fortsätze 27 zum ringförmigen Körper 26 hin vergrößert. Dadurch ist eine Spannungsverteilung verbessert und eine Versagenskraft der Fortsätze 27 erhöht.

Wie in Fig. 6 gut erkennbar, sind die Fortsätze 27 an beiden axialen Enden 28 des ringförmigen Körpers 26 ausgebildet. Die Fortsätze 27 bilden an beiden axialen Enden 28 jeweils eine Einführfase 33 für die Komponenten, die in axialer Richtung nach innen verläuft. Die Einführfase 33 ist zum Zwischenraum 29 hin ausgerichtet. Durch die Einführfase 33 sind die Komponenten durch das Sicherungselement 25 einfach und schnell miteinander verbindbar.

Das Sicherungselement 25 umfasst ferner zwei Aufnahmeelemente 34 für wenigstens ein nicht dargestelltes Montagemittel auf. Die Aufnahmeelemente 34 sind im Bereich der Ringenden 45 ausgebildet. Die Aufnahmeelemente 34 sind im Wesentlichen hakenförmig ausgebildet. Die Aufnahmeelemente 34 bilden Nasen, die im Bereich der Ringenden 45 einander zugewandt sind. Die Aufnahmeelemente 34 dienen zur Aufnahme des Montagemittels, insbesondere Entnahmewerkzeugs, um das Sicherungselement 25 zum Ausformen bei der Herstellung oder zum Demontieren elastisch zu verformen. Dabei wird das Sicherungselement 25 in entgegengesetzte Umfangsrichtungen aufgedehnt. Das Sicherungselement 25 kann durch das Montagemittel bei einem Herstellungsschritt gespreizt werden, sodass das Sicherungselement 25 von einem Kern eines Spritzgusswerkzeugs ausformbar bzw. abnehmbar ist.

Der ringförmige Körper 26 weist ferner eine Vielzahl von Rippen 35 auf, die sich radial nach außen erstrecken. Die Rippen 35 verbinden jeweils zwei axial gegenüberliegende Fortsätze 27 zur Erhöhung einer Haltekraft. Mit anderen Worten stehen die Rippen 35 über den ringförmigen Körper 26 radial nach außen vor. Wirkt im Betrieb und/oder bei einer Montage oder Demontage eine erhöhte Kraft auf die Fortsätze 27 stützen die Rippen 35 die Fortsätze 27 in axialer Richtung ab.

Die Rippen 35 sind in Umfangsrichtung am Außenumfang des ringförmigen Körpers 26 gleichmäßig verteilt angeordnet, sodass sich bei einem elastischen Aufdehnen, insbesondere bei einer Montage oder Demontage oder Ausformung, auftretende Spannungen im ringförmigen Körper 26 homogen verteilen.

Bei einem Zusammenbau einer Ventileinheit, die im Wesentlichen ein Ventil, insbesondere ein Slip-In-Ventil, einen Ventilblock 10 gemäß Fig. 1 bis 3 und ein Sicherungselement 25 gemäß Fig. 4 bis 6 umfasst, wird das Sicherungselement 25 durch Aufschieben auf den Kragen 13 des Ventilblocks 10 vorpositioniert. Beim Aufschieben wirkt der Kragen 13 mit der Einführfase 33 des Sicherungselements 25 zusammen derart, dass dieses in Umfangsrichtung aufgedehnt wird. Dadurch vergrößert sich die Durchgangsöffnung des Sicherungselements 25, sodass der Kragen 13 des Ventilblocks 10 in den Zwischenraum 29 eingreift. Anschließend wird das Ventil in die Kavität 11 des Ventilblocks zumindest teilweise eingeführt bis das Ventil mit einer Gegenkontur, insbesondere einem Gegenkragen, auf gleiche Weise wie der Kragen 13 des Ventilblocks 10 in den Zwischenraum 29 eingreift. Der Ventilblock 10 und das Ventil sind im montierten Zustand durch das Sicherungselement 25 formschlüssig verbunden. Das Sicherungselement 25 hält das Ventil in und/oder am Ventilblock 10 axial. Mit anderen Worten ist im montierten Zustand das Ventil durch das Sicherungselement 25 in und/oder am Ventilblock 10 axial fixiert.

Bei einem erfindungsgemäßen Herstellungsverfahren wird das Sicherungselement 25 durch wenigstens einen Spritzgussvorgang einstückig ausgebildet. Durch den Spritzgussvorgang wird das Sicherungselement 25 auf einem Kern eines Spritzgusswerkzeugs formschlüssig angeordnet. Um das Sicherungselement 25 vom Kern abzunehmen, wird das Sicherungselement 25 bzw. der ringförmige Körper 26 mittels eines Entnahmewerkzeugs durch Spreizen elastisch verformt. Das Sicherungselement 25 wird dabei solange elastisch verformt, bis die Durchgangsöffnung des ringförmigen Körpers 26 der maximalen Größe einer Außenkontur des Kerns entspricht. Durch die verbesserte konstruktive Ausbildung des Sicherungselements 25 kann ein aufwändiger und kostenintensiver Faltkern zur Ausformung des Sicherungselements 25 entfallen, wodurch die Herstellungskosten erheblich reduziert werden.

Fig. 7 zeigt eine schematische Schnittansicht der Übergänge 32', 32", 42, die nach der Zugdreiecksmethode ausgebildet sind. Die Übergänge 32', 32", 42 weisen die Längsseite 51 und die Breitseite 52 auf. Die Längsseite 51 der Übergänge 32', 32", 42 erstreckt sich in Zugkraftrichtung. Die Breitseite 52 verläuft im Wesentlich quer zur Zugkraftrichtung.

Generell werden bei der Zugdreiecksmethode mehrerer, insbesondere drei, Zugdreiecke 49 kombiniert. Die Zugdreiecke 49 sind als gleichschenklige Dreiecke ausgebildet. Ein erstes Zugdreieck 49' kann im Wesentlichen ein rechtwinkeliges Dreieck bilden. Die beiden Schenkel eines zweiten Zugdreiecks 49" entsprechen der Länge der halben Hypotenuse des ersten Zugdreiecks 49', wobei sich die Hypotenuse des zweiten Zugdreiecks 49" von der halben Länge, insbesondere Mitte, der Hypotenuse des ersten Zugdreiecks 49' ausgehend erstreckt. Ferner entsprechen die beiden Schenkel eines dritten Zugdreiecks 49‴ der Länge der halben Hypotenuse des zweiten Zugdreiecks 49", wobei sich die Hypotenuse des dritten Zugdreiecks 49‴ von der Mitte der Hypotenuse des zweiten Zugdreiecks 49" ausgehend erstreckt. Durch eine derartige Anordnung der Zugdreiecke 49 werden Spannungen im Bereich des jeweiligen Übergangs 32', 32", 42 verringert und somit eine Lebensdauer des Sicherungselements 25 sowie des Kragens 13 des Ventilblocks 10 erhöht.

Mittels der Zugdreiecksmethode werden die im Betrieb und/oder bei der Montage auftretenden Zugspannungen in den Übergängen 32', 32", 42 homogen verteilt. Mit anderen Worten werden die in den Übergängen 32', 32", 42 lokal auftretenden Zugspannungen mittels der Zugdreieckausbildung minimiert.

Darüber hinaus sind folgende Ausführungsformen offenbart:
1. Ventilblock (10) für wenigstens ein Ventil, insbesondere ein Slip-In-Ventil, umfassend:
   - wenigstens eine Kavität (11) zur Aufnahme des Ventils;
   - wenigstens zwei Öffnungen (12) für den Eintritt und/oder Austritt eines Fluides, wobei die Öffnungen (12) in die Kavität (11) münden;
   - wenigstens einen Montagebereich (14), in dem die wenigstens zwei Öffnungen (12) vorgesehen sind; und
   - wenigstens einen Kragen (13) zur Befestigung des Ventils, der sich zumindest abschnittsweise um die Kavität (11) erstreckt, wobei
   der Kragen (13) durch Urformen, insbesondere Spritzgießen oder Druckgießen, mit dem Ventilblock (10) einstückig ausgebildet ist.
2. Ventilblock nach Ausführungsform 1,
   **dadurch gekennzeichnet**, dass der Kragen (13) an einem ersten axialen Ende (17) der Kavität (11) ausgebildet ist, an dem die Kavität (11) zum Einführen des Ventils nach außen offen ist.
3. Ventilblock nach Ausführungsform 1 oder 2,
   **dadurch gekennzeichnet**, dass der Kragen (13) am Ventilblock (10) die Kavität (11) radial umlaufend ausgebildet ist.
4. Ventilblock nach einer der Ausführungsformen 1 bis 3,
   **dadurch gekennzeichnet**, dass der Kragen (13) eine stirnseitige Kontaktfläche (19) aufweist, an der das Ventil bei einer Montage anliegt.
5. Ventilblock nach einer der Ausführungsformen 1 bis 4,
   **gekennzeichnet durch**,
   wenigstens einen Fortsatz (21), der radial nach außen ausgebildet ist und vom Kragen (13) axial beabstandet ist.
6. Ventilblock nach einer der Ausführungsformen 1 bis 5,
   **gekennzeichnet durch**,
   ein Vielzahl von Rippen (22), die gitterförmig ausgebildet sind.
7. Ventilblock nach einer der Ausführungsformen 1 bis 6,
   **gekennzeichnet durch**,
   wenigstens ein Formschlussmittel (23), durch das der Ventilblock (10) mit weiteren Ventilblöcken, insbesondere platzsparend, formschlüssig verbindbar ist.
8. Ventilblock nach der Ausführungsform 7,
   **dadurch gekennzeichnet**, dass
   das Formschlussmittel (23) V-förmig, insbesondere Schwalbenschwanz-förmig ausgebildet ist.
9. Ventilblock nach einer der Ausführungsformen 1 bis 8,
   **dadurch gekennzeichnet**, dass
   der Montagebereich (14) an einer Unterseite (24) des Ventilblocks (10) angeordnet ist und mit wenigstens einem Flanschanschluss verbindbar ist.
10. Ventilblock nach einer der Ausführungsformen 1 bis 9,
   **dadurch gekennzeichnet**, dass
   der Montagebereich (14) durch die Öffnungen (12) für das Fluid mit der Kavität (11) fluidverbunden ist.
11. Ventileinheit mit wenigstens einem Ventil, insbesondere einem Wegeventil, einem Ventilblock (10) nach einer der Ausführungsformen 1 bis 10 und einem Sicherungselement (25), wobei das Ventil und der Ventilblock (10) jeweils wenigstens eine Kontur (18), insbesondere einen Kragen (13), zur Befestigung aufweisen, wobei das Ventil und der Ventilblock (10) mit den jeweiligen Konturen (18) in das Sicherungselement (25) eingreifen, sodass das Sicherungselement (25) mit den Konturen (18) zusammenwirkt und das Ventil und den Ventilblock (10) axial miteinander verbindet.
12. Verfahren zur Herstellung eines Ventilblocks (10) für wenigstens ein Ventil, insbesondere ein Slip-In-Ventil, umfassend:
   - wenigstens eine Kavität (11) zur Aufnahme des Ventils;
   - wenigstens zwei Öffnungen (12) für den Eintritt und/oder Austritt eines Fluides, wobei die Öffnungen (12) in die Kavität (11) münden;
   - wenigstens einen Montagebereich (14), in dem die wenigstens zwei Öffnungen (12) vorgesehen sind; und
   - wenigstens einen Kragen (13) zur Befestigung des Ventils, der sich zumindest abschnittsweise um die Kavität (11) erstreckt, wobei
   der Kragen (13) durch wenigstens ein Urformverfahren, insbesondere Spritzgußverfahren oder Druckgußverfahren, mit dem Ventilblock (10) einstückig ausgebildet wird.
13. Verfahren nach der Ausführungsform 12,
   dadurch gekennzeichnet, dass
   der Kragen (13) zur Befestigung des Ventils und/oder die Kavität (11) und/oder der Montagebereich (14) ausschließlich durch wenigstens ein Urformverfahren ausgebildet werden.

### Bezuaszeichenliste

- 10: Ventilblock
- 11: Kavität
- 12: Öffnungen
- 13: Kragen
- 14: Montagebereich
- 15: Sackloch
- 16: Dichtfläche
- 17: erstes axiales Ende der Kavität
- 18: Kontur
- 19: Kontaktfläche
- 21: Fortsatz
- 22: Rippen
- 23: Formschlussmittel
- 24: Unterseite
- 25: Sicherungselement
- 26: ringförmiger Körper
- 27: Fortsätze
- 28: axiales Ende des ringförmigen Körpers
- 29: Zwischenraum
- 31: Anlagefläche
- 32: Übergang
- 33: Einführfase
- 34: Aufnahmeelement
- 35: Rippen
- 36: Grundkörper
- 37: Verstärkungsstruktur
- 38: Durchgangsöffnungen
- 39: umlaufende Nut
- 41: Stufen
- 42: Übergang
- 43: zweites axiales Ende
- 44: konische Abschnitte
- 45: Ringenden
- 46: Schlitz
- 47: Kopfseite
- 48: Innenumfangsfläche
- 49: Zugdreiecke
- 51: Längsseite
- 52: Breitseite

## Patentansprüche

1. Sicherungselement (25) zur Befestigung einer ersten Komponente, nämlich eines Ventils, an einer zweiten Komponente, nämlich einem Ventilblock (10) für wenigstens das Ventil, insbesondere ein Slip-In-Ventil, wobei das Sicherungselement (25) einen ringförmigen Körper (26) aufweist, der radial nach außen offen ausgebildet ist und Fortsätze (27) aufweist, die sich radial nach innen erstrecken, wobei die Fortsätze (27) jeweils an axialen Enden (28) des Körpers (26) angeordnet und zueinander axial beabstandet sind derart, dass ein Zwischenraum (29) zwischen den Fortsätzen (27) zur Aufnahme der Komponenten ausgebildet ist, wobei die Fortsätze (27) wenigstens eine Anlagefläche (31), insbesondere Haltefläche, für die Komponenten aufweisen, die axial innen ausgebildet ist, und wobei der ringförmige Körper (26) eine Vielzahl von Rippen (35) aufweist, die sich radial nach außen erstrecken, wobei die Rippen (35) jeweils zwei axial gegenüberliegende Fortsätze (27) zur Erhöhung einer Haltekraft verbinden, wobei der Ventilblock (10)
- wenigstens eine Kavität (11) zur Aufnahme des Ventils,
- wenigstens zwei Öffnungen (12) für den Eintritt und/oder Austritt eines Fluides, wobei die Öffnungen (12) in die Kavität (11) münden,
- wenigstens einen Montagebereich (14), in dem die wenigstens zwei Öffnungen (12) vorgesehen sind, und
- wenigstens einen Kragen (13) zur Befestigung des Ventils, der sich zumindest abschnittsweise um die Kavität (11) erstreckt,
umfasst, wobei sich der Kragen (13) von der Kavität (11) radial nach außen erstreckt, wobei der Kragen (13) angepasst ist, um den Ventilblock (10) mittels des Sicherungselements (25) mit dem Ventil zu verbinden, wobei der Ventilblock (10) durch Urformen, insbesondere Spritzgießen oder Druckgießen, einstückig ausgebildet ist.

2. Sicherungselement nach Anspruch 1,
**dadurch gekennzeichnet, dass**
der ringförmige Körper (26) zur Montage und/oder Demontage elastisch verformbar ist und/oder dass
mehrere Fortsätze (27) jeweils an den axialen Enden (28) angeordnet sind, wobei die Fortsätze (27) in Umfangsrichtung gleichmäßig verteilt ausgebildet sind, und/oder dass
wenigstens ein Übergang (32) zwischen den Fortsätzen (27) und dem ringförmigen Körper (26) nach der Zugdreiecksmethode ausgebildet ist.

3. Sicherungselement nach Anspruch 1 oder 2,
**dadurch gekennzeichnet, dass**
die Fortsätze (27) im Querschnitt jeweils trapezförmig ausgebildet sind und/oder dass
die Fortsätze (27) ein Widerstandsmoment aufweisen, das sich von innen radial nach außen zum ringförmigen Körper (26) hin vergrößert, und/oder dass
die Fortsätze (27) an beiden axialen Enden (28) des ringförmigen Körpers (26) jeweils wenigstens eine Einführfase (33) für die Komponenten bilden, die axial nach innen verläuft.

4. Sicherungselement nach einem vorhergehenden der Ansprüche,
**dadurch gekennzeichnet, dass**
der ringförmige Körper (26) wenigstens zwei Aufnahmeelemente (34) für wenigstens ein Montagemittel zum Ausformen und/oder Demontieren, insbesondere zum elastischen Verformen des Sicherungselements (25) aufweist, und/oder dass
die Rippen (35) in Umfangsrichtung gleichmäßig verteilt angeordnet sind, sodass sich bei einem elastischen Aufdehnen, insbesondere bei einer Montage oder Demontage, auftretende Spannungen im Sicherungselement (25) homogen verteilen.

5. Sicherungselement nach einem der vorhergehenden Ansprüche,
**dadurch gekennzeichnet, dass**
der Kragen (13) an einem ersten axialen Ende (17) der Kavität (11) ausgebildet ist, an dem die Kavität (11) zum Einführen des Ventils nach außen offen ist.

6. Sicherungselement nach einem der vorhergehenden Ansprüche,
**dadurch gekennzeichnet, dass**
der Kragen (13) am Ventilblock (10) die Kavität (11) radial umlaufend ausgebildet ist und/oder dass
der Kragen (13) eine stirnseitige Kontaktfläche (19) aufweist, an der das Ventil bei einer Montage anliegt.

7. Sicherungselement nach einem der vorhergehenden Ansprüche,
**gekennzeichnet durch**,
wenigstens einen Fortsatz (21), der radial nach außen ausgebildet ist und vom Kragen (13) axial beabstandet ist, und/oder durch eine Vielzahl von Rippen (22), die gitterförmig ausgebildet sind.

8. Sicherungselement nach einem der vorhergehenden Ansprüche,
**gekennzeichnet durch**,
wenigstens ein Formschlussmittel (23), durch das der Ventilblock (10) mit weiteren Ventilblöcken, insbesondere platzsparend, formschlüssig verbindbar ist.

9. Sicherungselement nach Anspruch 8,
**dadurch gekennzeichnet, dass**
das Formschlussmittel (23) V-förmig, insbesondere Schwalbenschwanz-förmig ausgebildet ist.

10. Sicherungselement nach einem der vorhergehenden Ansprüche,
**dadurch gekennzeichnet, dass**
der Montagebereich (14) an einer Unterseite (24) des Ventilblocks (10) angeordnet ist und mit wenigstens einem Flanschanschluss verbindbar ist und/oder dass
der Montagebereich (14) durch die Öffnungen (12) für das Fluid mit der Kavität (11) fluidverbunden ist.

11. Verfahren zur Herstellung eines Sicherungselements (25) nach einem der vorhergehenden Ansprüche, bei dem ein ringförmiger Körper (26) durch wenigstens einen Spritzgussvorgang einstückig ausgebildet wird, der radial nach außen offen ausgebildet ist und eine Vielzahl von Fortsätzen (27) aufweist, die sich radial nach innen erstrecken, wobei die Fortsätze (27) jeweils an einem axialen Ende des Körpers (26) angeordnet sind und zueinander axial beabstandet sind derart, dass ein Zwischenraum (29) zwischen den Fortsätzen (27) zur Aufnahme der Komponenten ausgebildet ist.

12. Verfahren nach Anspruch 11,
**dadurch gekennzeichnet, dass**
der ringförmige Körper (26) durch den Spritzgussvorgang auf einem Kern eines Spritzgusswerkzeugs formschlüssig angeordnet wird und/oder dass der ringförmige Körper (26) durch elastisches Verformen, insbesondere durch Spreizen vom Kern, abgenommen wird und/oder dass der ringförmige Körper (26) durch wenigstens ein Entnahmewerkzeug, insbesondere eine Abziehzange, zum Abnehmen elastisch verformt, insbesondere gespreizt wird.
